# EUROPEAN PATENT APPLICATION

(11) **EP 4 346 298 A1**
(43) Date of publication of application: **03.04.2024**
(21) Application number: 23194262.4
(22) Date of filing: 30.08.2023
(51) Int. Cl.: H04W 56/00

(54) **FACILITATING TIMING ADVANCE OPERATIONS FOR MULTIPLE UPLINK TRANSMISSIONS**

(30) Priority: 29.09.2022 GB 202214310
(71) Applicant: Nokia Technologies Oy, 02610 Espoo (FI)
(72) Inventor: Deghel, Matha, 92120 Montrouge (FR); Laddu, Keeth Saliya Jayasinghe, 02140 Espoo (FI)
(74) Representative: Nokia EPO representatives

(57) **Abstract**

According to various, but not necessarily all, examples there is provided an apparatus performing a first uplink transmission with a first timing advance and a second uplink transmission with a second timing advance. The first uplink transmission is associated with a first identifier and the second uplink transmission is associated with a second identifier. The apparatus further receives instructions for switching the second identifier to a third identifier, wherein the third identifier is associated with a third uplink transmission. The apparatus further performs at least one of: configuring the third uplink transmission to be associated with the second timing advance or an updated second timing advance or a third timing advance, or dropping the third uplink transmission.

## Description

### TECHNOLOGICAL FIELD

Examples of the disclosure relate to apparatuses, methods and computer program instructions for facilitating timing advance operations for multiple uplink transmissions. Some relate to facilitating timing advance operations for multi transmission and reception point scenarios in new radio telecommunications.

### BACKGROUND

In telecommunications, timing advance (TA) value is a value used to account for 'time of flight'. In at least some examples, timing advance corresponds to the length of time a signal takes to reach a base station from a user equipment, such as a mobile device. The time at which a user equipment is allowed to transmit a burst of data can be adjusted to prevent collisions with other users. TA is a variable controlling this adjustment. A timing advance group (TAG) can consist of one or more serving cells with the same uplink TA. The TA of a user equipment, a cell or a group of cells can be changed when properties of the user equipment, cell or group of cells change.

### BRIEF SUMMARY

According to various, but not necessarily all, examples there is provided an apparatus comprising means for:
performing a first uplink transmission with a first timing advance and a second uplink transmission with a second timing advance, wherein the first uplink transmission is associated with a first identifier and the second uplink transmission is associated with a second identifier;
receiving instructions for switching the second identifier to a third identifier, wherein the third identifier is associated with a third uplink transmission; and
performing at least one of: configuring the third uplink transmission to be associated with the second timing advance or an updated second timing advance or a third timing advance, or dropping the third uplink transmission.

According to some but not necessarily all examples, the first uplink transmission is to a first transmission reception point (TRP); the second uplink transmission is to a second TRP, and the third uplink transmission is to a third TRP different to the second TRP.

According to some but not necessarily all examples, the instructions for switching the second identifier to a third identifier comprise instructions to change or activate a physical cell indicator (PCI) and/or to change or activate a timing advance group (TAG).

According to some but not necessarily all examples, the second timing advance and third timing advance are associated with different timing advance groups (TAGs).

According to some but not necessarily all examples, the first, second and third identifier each are or correspond to at least one transmission state.

According to some but not necessarily all examples, wherein each at least one transmission state is constrained by spatial direction and/or power.

According to some but not necessarily all examples, each at least one transmission state is defined by a transmission configuration indicator (TCI) state.

According to some but not necessarily all examples, the second identifier and third identifier correspond to at least one of: a same CORESETPoollndex, a same PCI, a same TAG, a same TRP, or a same TRP identifier (TRP ID).

According to some but not necessarily all examples, the first uplink transmission uses a first beam in a first direction, the second uplink transmission uses a second beam in a second direction, and the third uplink transmission uses a third beam in a third direction.

According to some but not necessarily all examples, the instructions for switching the second identifier to a third identifier are received via a medium access control control element (MAC CE) and/or from downlink control information (DCI).

According to some but not necessarily all examples, receiving the instructions for switching the second identifier to a third identifier comprise receiving an activation of a plurality of transmission states via a medium access control control element (MAC CE) and/or receiving an indication of at least one of the activated transmission states via downlink control information (DCI).

According to some but not necessarily all examples, the apparatus further comprises means for:
if the third timing advance is available configuring the third uplink transmission to be associated the third timing advance,
if the third timing advance is not available, configuring the third uplink transmission to be associated with the second timing advance or an updated second timing advance, or dropping the third uplink transmission.

According to some but not necessarily all examples, the apparatus further comprises means for:
once the third timing advance is available, configuring a fourth uplink transmission to be associated to the third timing advance.

According to some but not necessarily all examples, the apparatus comprises means for:
receiving instructions from network that specify whether the third uplink transmission is to be associated with the second timing advance or an updated second timing advance or a third timing advance, or the third uplink transmission is to be dropped.

According to some but not necessarily all examples, the third uplink transmission is performed contemporaneously with the first uplink transmission and/or the second uplink transmission.

According to some but not necessarily all examples, the apparatus further comprises means for:
during a transition period from receiving instructions for switching the second identifier to a third identifier until the third uplink transmission is performed, performing a second uplink transmission with the second timing advance or an updated second timing advance.

According to some but not necessarily all examples, the apparatus is a user equipment.

According to various, but not necessarily all, examples there is provided a method comprising:
performing a first uplink transmission with a first timing advance and a second uplink transmission with a second timing advance, wherein the first uplink transmission is associated with a first identifier and the second uplink transmission is associated with a second identifier;
receiving instructions for switching the second identifier to a third identifier, wherein the third identifier is associated with a third uplink transmission; and
performing at least one of: configuring the third uplink transmission to be associated with the second timing advance or an updated second timing advance or a third timing advance, or dropping the third uplink transmission.

According to various, but not necessarily all, examples there is provided computer program instructions for causing an apparatus to perform:
performing a first uplink transmission with a first timing advance and a second uplink transmission with a second timing advance, wherein the first uplink transmission is associated with a first identifier and the second uplink transmission is associated with a second identifier;
receiving instructions for switching the second identifier to a third identifier, wherein the third identifier is associated with a third uplink transmission; and
performing at least one of: configuring the third uplink transmission to be associated with the second timing advance or an updated second timing advance or a third timing advance, or dropping the third uplink transmission.

According to various, but not necessarily all, examples there is provided an apparatus comprising means for:
sending instructions to a user equipment configured for a first uplink transmission with a first timing advance wherein the first uplink transmission is associated with a first identifier, and configured for a second uplink transmission with a second timing advance wherein the second uplink transmission is associated with a second identifier, the instructions to switch the second identifier to a third identifier, wherein the third identifier is associated with a third uplink transmission;
wherein the instructions specify the third uplink transmission to have the second timing advance or an updated second timing advance or a third timing advance, or to drop the third uplink transmission.

According to some but not necessarily all examples, the apparatus is a network node.

According to some but not necessarily all examples, the instructions to switch the second identifier to a third identifier comprise instructions to change or activate a physical cell indicator (PCI) and/or to change or activate a timing advance group (TAG),
wherein second timing advance and third timing advance are associated with different timing advance groups (TAGs).

According to various, but not necessarily all, examples there is provided a method comprising:
sending instructions to a user equipment configured for a first uplink transmission with a first timing advance wherein the first uplink transmission is associated with a first identifier, and configured for a second uplink transmission with a second timing advance wherein the second uplink transmission is associated with a second identifier, the instructions to switch the second identifier to a third identifier, wherein the third identifier is associated with a third uplink transmission;
wherein the instructions specify the third uplink transmission to have the second timing advance or an updated second timing advance or a third timing advance, or to drop the third uplink transmission.

According to various, but not necessarily all, examples there is provided computer program instructions for causing an apparatus to perform:
sending instructions to a user equipment configured for a first uplink transmission with a first timing advance wherein the first uplink transmission is associated with a first identifier, and configured for a second uplink transmission with a second timing advance wherein the second uplink transmission is associated with a second identifier, the instructions to switch the second identifier to a third identifier, wherein the third identifier is associated with a third uplink transmission;
wherein the instructions specify the third uplink transmission to have the second timing advance or an updated second timing advance or a third timing advance, or to drop the third uplink transmission.

According to various, but not necessarily all, examples there is provided a system comprising:
a network node comprising means for:
   sending instructions to a user equipment configured for a first uplink transmission with a first timing advance wherein the first uplink transmission is associated with a first identifier, and configured for a second uplink transmission with a second timing advance wherein the second uplink transmission is associated with a second identifier, the instructions to switch the second identifier to a third identifier, wherein the third identifier is associated with a third uplink transmission;
   wherein the instructions specify the third uplink transmission to have the second timing advance or an updated second timing advance or a third timing advance, or to drop the third uplink transmission; and
a terminal node comprising an apparatus.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3 shows another example of the subject matter described herein;
FIG. 4 shows another example of the subject matter described herein;
FIG. 5 shows another example of the subject matter described herein;
FIG. 6 shows another example of the subject matter described herein;
FIG. 7 shows another example of the subject matter described herein;
FIG. 8 shows another example of the subject matter described herein;
FIG. 9 shows another example of the subject matter described herein;
FIG. 10 shows another example of the subject matter described herein;
FIG. 11 shows another example of the subject matter described herein;
FIG. 12 shows another example of the subject matter described herein; and
FIG. 13 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DEFINITIONS

- 5G: 5^{th} Generation
- BWP: Bandwidth Part
- CC: Component Carrier
- CCE: Control Channel Element
- CORESET: Control Resource Set
- CP-OFDM: Cyclic Prefix - Orthogonal Frequency Division Multiplexing
- C-RNTI: Cell Radio-Network Temporary Identifier
- CSI: Channel State Information
- DCI: Downlink Control Information
- DL: Downlink
- DMRS: DeModulation Reference Signal
- FR 1: Frequency Range 1
- FR 2: Frequency Range 2
- gNB: 5G / NR base station
- HARQ Hybrid: Automatic Repeat request
- HARQ-ACK: HARQ Acknowledgment
- MAC CE: Medium Access Control Control Element
- MIMO: Multiple-Input and Multiple-Output
- NR: New Radio
- PDCCH: Physical Downlink Control Channel
- PDSCH: Physical Downlink Shared Channel
- PRACH: Physical RACH
- PUCCH: Physical Uplink Control Channel
- PUSCH: Physical Uplink Shared Channel
- RACH: Random Access Channel
- RAN: Radio Access Network
- RNTI: Radio-Network Temporary Identifier
- RRC: Radio Resource Control
- RS: Reference Signal
- SpCell: Special Cell
- SR: Scheduling Request
- SRI: SRS resource indicator
- SRS: Sounding Reference Signal
- SSB: Synchronization Signal Block
- SSB: Synchronization Signal Block
- TCI: Transmission Configuration Indicator
- TDM: Time Division Multiplexing
- TRP: Transmission Reception Point
- UCI: Uplink Control Information
- UE: User Equipment
- UL: Uplink

### DETAILED DESCRIPTION

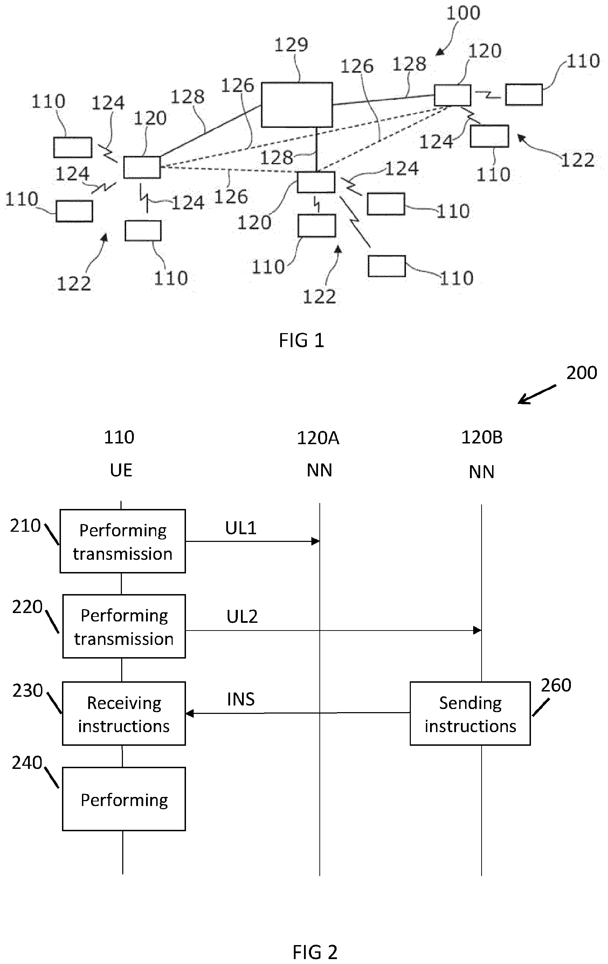

FIG 1. illustrates an example of a network 100 comprising a plurality of network nodes including terminal nodes 110, access nodes 120 and one or more core nodes 129. The terminal nodes 110 and access nodes 120 communicate with each other. The one or more core nodes 129 communicate with the access nodes 120.

The network 100 is in this example a radio telecommunications network, in which at least some of the terminal nodes 110 and access nodes 120 communicate with each other using transmission/reception of radio waves.

The one or more core nodes 129 may, in some examples, communicate with each other. The one or more access nodes 120 may, in some examples, communicate with each other.

The network 100 may be a cellular network comprising a plurality of cells 122 each served by an access node 120. In this example, the interface between the terminal nodes 110 and an access node 120 defining a cell 122 is a wireless interface 124.

The access node 120 is a cellular radio transceiver. The terminal nodes 110 are cellular radio transceivers.

In the example illustrated the cellular network 100 is a third generation Partnership Project (3GPP) network in which the terminal nodes 110 are user equipment (UE) and the access nodes 120 are base stations.

In the particular example illustrated the network 100 is an Evolved Universal Terrestrial Radio Access network (E-UTRAN). The E-UTRAN consists of E-UTRAN NodeBs (eNBs) 120, providing the E-UTRA user plane and control plane (RRC) protocol terminations towards the UE 110. The eNBs 120 are interconnected with each other by means of an X2 interface 126. The eNBs are also connected by means of the S1 interface 128 to the Mobility Management Entity (MME) 129.

In other example the network 100 is a Next Generation (or New Radio, NR) Radio Access network (NG-RAN). The NG-RAN consists of gNodeBs (gNBs) 120, providing the user plane and control plane (RRC) protocol terminations towards the UE 110. The gNBs 120 are interconnected with each other by means of an X2/Xn interface 126. The gNBs are also connected by means of the N2 interface 128 to the Access and Mobility management Function (AMF).

A user equipment comprises a mobile equipment. Where reference is made to user equipment that reference includes and encompasses, wherever possible, a reference to mobile equipment.

The inventors anticipate a future requirement for support of multi-timing advance (TA) for intra-cell and inter-cell multi-Transmission Reception Point (mTRP) scenarios in which two TA loops, each for a timing advance group (TAG), are be maintained for a given component carrier (CC) or bandwidth part (BWP). When a new physical cell indicator (PCI) is activated and/or when at least one corresponding Transmission Configuration Indicator (TCI) state is activated/indicated, the UE 110 behaviour should be defined for both: during the transition period before this TCI state becomes applicable, and as well as after the transition period and/or before the UE 110 transmits Random Access Channel (RACH) or receives some TA update corresponding to the newly activated PCI. In examples of this disclosure the UE 110 behaviour is defined.

In some examples, a system 200 comprise at least one network node 120 and a user equipment / terminal node 110.

The following description relates to examples of an apparatus 110 that comprises means for: performing a first uplink transmission with a first timing advance and a second uplink transmission with a second timing advance, wherein the first uplink transmission is associated with a first identifier and the second uplink transmission is associated with a second identifier;
receiving instructions for switching the second identifier to a third identifier, wherein the third identifier is associated with a third uplink transmission; and performing at least one of: configuring the third uplink transmission to be associated with the second timing advance or an updated second timing advance or a third timing advance, or dropping the third uplink transmission. In some examples, the apparatus 110 is configured to be a terminal network node 110, for example, a user equipment 110.

The following description relates to examples of an apparatus 120 that comprises means for: sending instructions to a user equipment 110 configured for a first uplink transmission with a first timing advance wherein the first uplink transmission is associated with a first identifier, and configured for a second uplink transmission with a second timing advance wherein the second uplink transmission is associated with a second identifier, the instructions to switch the second identifier to a third identifier, wherein the third identifier is associated with a third uplink transmission; wherein the instructions specify the third uplink transmission to have the second timing advance or an updated second timing advance or a third timing advance, or to drop the third uplink transmission. In some examples, the apparatus 120 is a network node 120.

FIG. 2 illustrates an example of a system 200 according to embodiments of the disclosure. The illustrated system 200 comprises a user equipment 110, a first network node 120A and a second network node 120B. At 210, the user equipment 110 performs a first uplink transmission (UL1) with a first timing advance, the first uplink transmission being associated with a first identifier. The first uplink transmission is to the first network node 120A.

At 220, the user equipment 110 performs a second uplink transmission (UL2) with a second timing advance, the second uplink transmission being associated with a second identifier. The second uplink transmission is to the second network node 120A.

The uplink transmissions (UL1, UL2) may be intracell, within a cell, or intercell, between cells.

At 260, the second network node 120B sends instructions to the user equipment 110. The instructions being to switch the second identifier to a third identifier. The third identifier is associated with a third uplink transmission (not illustrated in FIG 2).

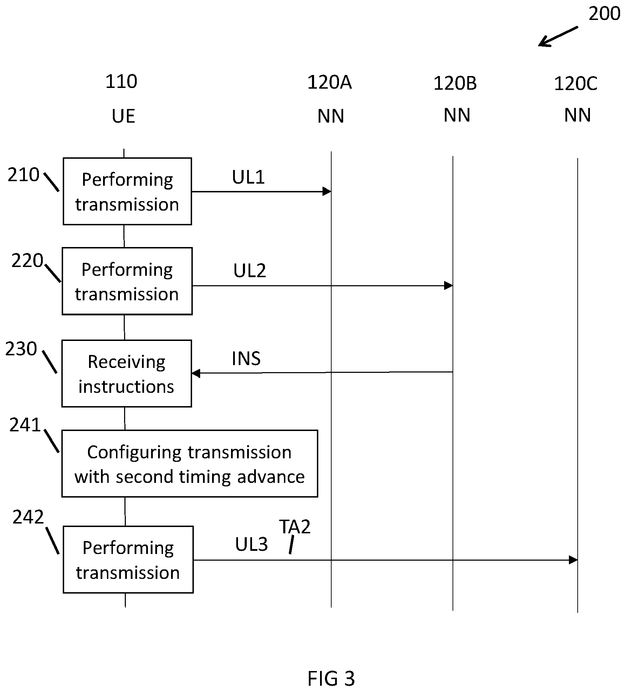

The instructions specify the third uplink transmission to have the second timing advance or an updated second timing advance or a third timing advance, or to drop the third uplink transmission. This is further illustrated in FIGs 3 to 7.

In some examples, the second timing advance and third timing advance are associated with different timing advance groups (TAGs).

At 230 of FIG 2, the user equipment 110 receives the instructions for switching the second identifier to a third identifier, where the third identifier is associated with a third uplink transmission.

In the illustrated example, the instructions are transmitted by/received from the second network node 120B, in other examples the instructions are transmitted by/received from a different network node 120.

The instructions from the network 100 specify whether the third uplink transmission is to be associated with the second timing advance or an updated second timing advance or a third timing advance, or the third uplink transmission is to be dropped.

The first, second and third identifier each may be or correspond to at least one transmission state. In some examples, the transmission state is constrained by spatial direction and/or power and may be a spatially constrained transmission state.

In some examples, the transmission state is defined by a transmission configuration indicator (TCI) state. TCI state can indicate a quasi-colocation information, an uplink beam requirement, and/or an uplink power requirement.

In some examples the transmission state comprises an uplink beam requirement for the 5G frequency range FR2, and an uplink power requirement for the 5G frequency range FR1.

In some but not necessarily all examples, the instructions for switching the second identifier to a third identifier comprise at least one of spatial relation information, power control information, or a sounding reference signal (SRS) resource indicator.

In some but not necessarily all examples, the instructions for switching the second identifier to a third identifier are received via a medium access control control element (MAC CE) and/or from downlink control information (DCI). For example, the instructions comprise receiving an activation of a plurality of transmission states via a MAC CE and/or receiving an indication of at least one of the activated transmission states via DCI. In some examples the user equipment 110 receives an activation of a plurality of transmission states, for example eight transmission states, via a MAC CE and subsequently the user equipment 110 receives an indication of at least one of the activated transmission states via DCI.

At 240, the user equipment 110 performs one of a number of actions as illustrated in FIGs 3 to 7. The illustrated actions involve configuring the third uplink transmission to be associated with the second timing advance or an updated second timing advance or a third timing advance, or dropping the third uplink transmission.

FIG. 3 illustrates an example of a system 200 according to embodiments of the disclosure. In FIG. 3, block 240 of FIG. 2 comprises blocks 241 and 242.

At 241, the user equipment 110 configures a third uplink transmission to be associated with the second timing advance. This can occur, for example, if the third timing advance is not available. The third timing advance can be available via user equipment 110 autonomous adjustment and/or based on a TA indication/update from the network 100.

At 242, the user equipment 110 performs a third uplink transmission (UL3) with the second timing advance (TA2), the third uplink transmission being associated with a third identifier. The third uplink transmission is to a third network node 120C different to the first network node 120A and the second network node 120B. In some examples, the third uplink transmission is performed contemporaneously with the first uplink transmission UL1 and/or the second uplink transmission UL2. In some examples, the third uplink transmission UL3 is performed simultaneously with the first uplink transmission UL1 and/or the second uplink transmission UL2.

In some examples, the first uplink transmission is to a first transmission reception point (TRP), the second uplink transmission is to a second TRP, and the third uplink transmission is to a third TRP different to the second TRP. In some examples, the first uplink transmission uses a first beam in a first direction, the second uplink transmission uses a second beam in a second direction different to the first direction, and the third uplink transmission uses a third beam in a third direction different to the first direction and to the second direction.

The instructions for switching the second identifier to a third identifier can comprise instructions to change or activate a physical cell indicator (PCI) and/or to change or activate a TAG. In some examples, the first uplink transmission is to a first network node 120A associated with a first TAG, the second uplink transmission to a second network node 120B associated with a second TAG, and the third uplink transmission to a third network node 120C associated with a third TAG different to the second TAG. In some examples, the first uplink transmission is to a first network node 120A associated with a first PCI, the second uplink transmission to a second network node 120B associated with a second PCI, and the third uplink transmission to third network node 120C associated with a third PCI different to the second PCI.

The second and third identifiers, or the TCI states corresponding to the second and third identifiers, may correspond to at least one of the following: a same Control Resource Set Pool Index (CORESETPoollndex), a same TAG, a same PCI, a same TRP or a same TRP identifier (TRP ID). In some but not necessarily all examples, the user equipment 110 replaces the second uplink transmission (associated with the second identifier) with the third uplink transmission (associated with the third identifier). The user equipment 110 may re-use the CORESETPoollndex assigned to the second uplink transmission with the third uplink transmission to the third TRP.

In some examples, there is a delay between receiving instructions for switching the second identifier to a third identifier and configuring the third uplink transmission. The delay may comprise uplink signaling to confirm reception of the instructions for switching the second identifier to a third identifier. In some examples, the uplink signaling comprises a hybrid automatic repeat request acknowledgement (HARQ ACK).

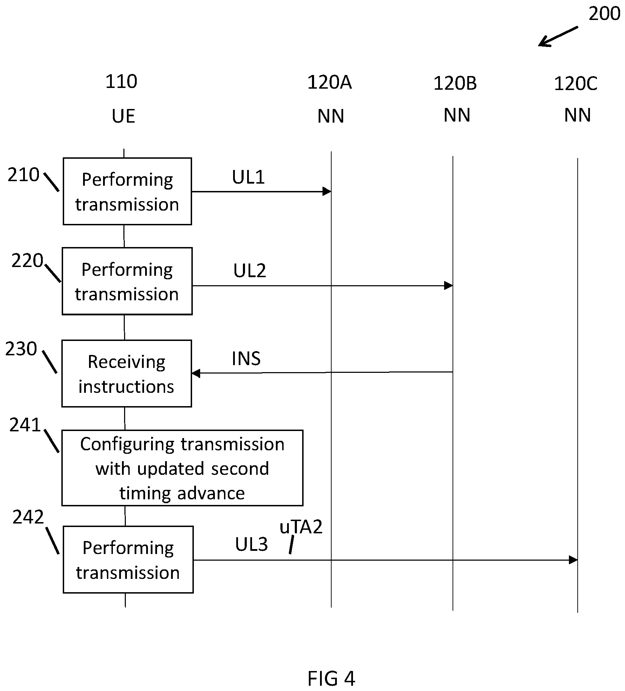

The features described above regarding the embodiment of FIG. 3 may also apply to the other embodiments and figures described herein. For example, in some of the examples as described regarding FIGs 4 to 7, the first uplink transmission is to a first transmission reception point (TRP), the second uplink transmission is to a second TRP, and the third uplink transmission is to a third TRP different to the second TRP.

FIG. 4 illustrates an example of a system 200 according to embodiments of the disclosure. In FIG. 4, block 240 of FIG. 2 comprises blocks 243 and 243.

At 243, the user equipment 110 configures a third uplink transmission to be associated with an updated second timing advance. This can occur, for example, if the third timing advance is not available. An updated version of the second timing advance can occur via user equipment 110 autonomous adjustment and/or based on a TA indication/update from the network 100.

At 244, the user equipment 110 performs a third uplink transmission (UL3) with the updated second timing advance (uTA2), the third uplink transmission being associated with a third identifier and being to a third network node 120C.

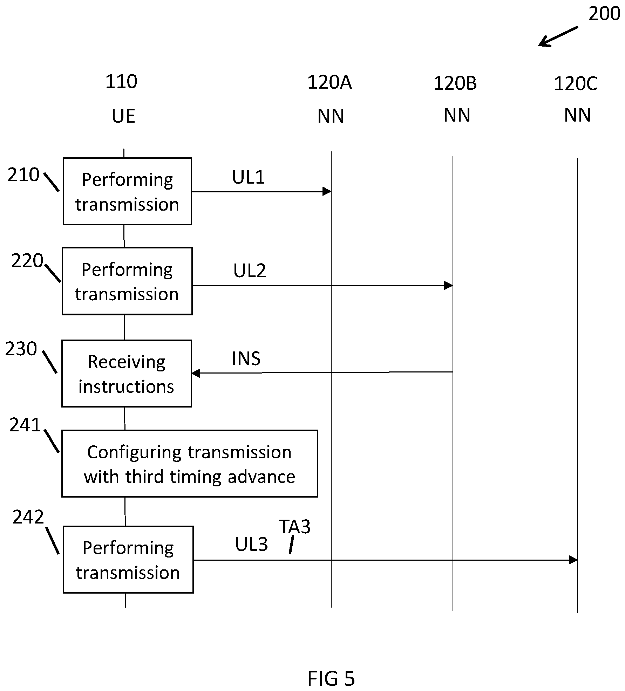

FIG. 5 illustrates an example of a system 200 according to embodiments of the disclosure. In FIG. 5, block 240 of FIG. 2 comprises blocks 245 and 246. At 245, the user equipment 110 configures a third uplink transmission to be associated with the third timing advance. This can occur, for example, if the third timing advance is available.

At 246, the user equipment 110 performs a third uplink transmission (UL3) with the third timing advance (TA3), the third uplink transmission being associated with a third identifier and being to a third network node 120C.

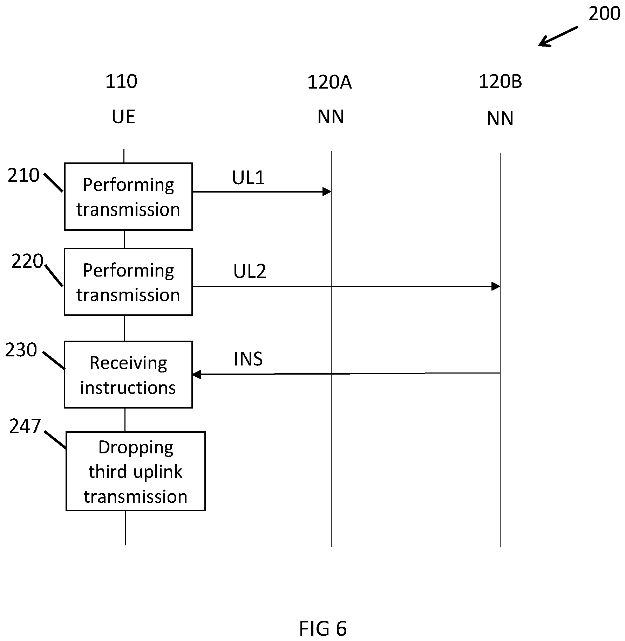

FIG. 6 illustrates an example of a system 200 according to embodiments of the disclosure. In FIG. 6, block 240 of FIG. 2 comprises block 247. At 247, the user equipment 110 drops the third uplink transmission. In some examples, this involves cancelling, suspending, and/or not performing the third uplink transmission. In some examples, future uplink transmissions are also dropped. Dropping the third uplink transmission can occur, for example, if the third timing advance is not available.

In some examples, the UE 110 may determine whether to drop the third uplink transmission depending on whether the UE 110 can correct timing misalignment using autonomous adjustment. The timing misalignment may be due to the switch from the second identifier to the third identifier. In some but not necessarily all examples, if the UE 110 determines that it cannot correct timing misalignment using autonomous adjustment, which may imply that a propagation delay difference corresponding to the second identifier and the third identifier is relatively big or is larger than a threshold, the UE 110 may determine to drop the third uplink transmission. Otherwise, if the UE 110 determines that it can correct timing misalignment using autonomous adjustment, which may imply that the propagation delay difference corresponding to the second identifier and the third identifier is relatively small or is smaller than a threshold, the UE 110 may determine to not drop the third uplink transmission.

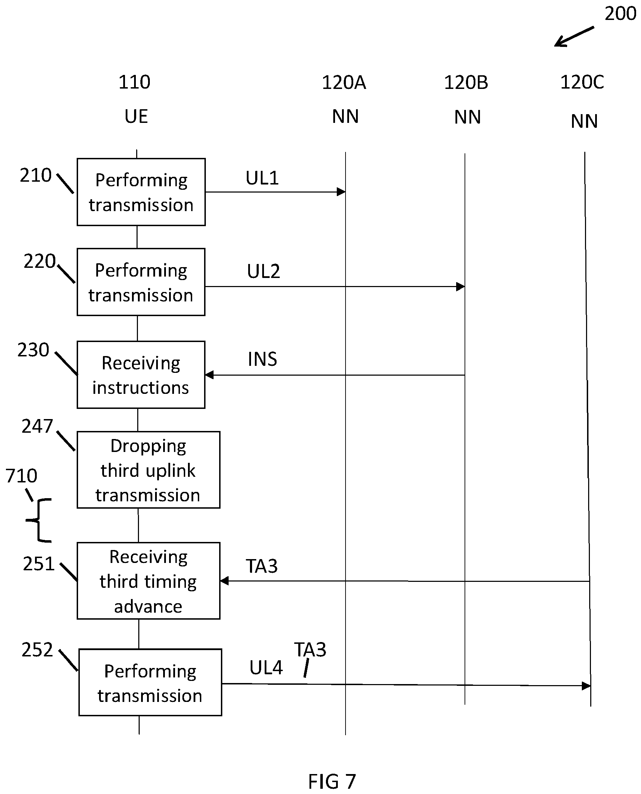

In some examples, as illustrated in FIG. 7, once the third timing advance is available the third uplink transmission is configured and/or transmission of the third uplink transmission is performed.

FIG. 7 illustrates an example of a system 200 according to embodiments of the disclosure. In FIG. 7, additional blocks 251 and 252 occur after block 247. In some examples there is a delay 710 between blocks 247 and 251 as illustrated by the bracket.

At 251, the user equipment 110 receives the third timing advance. In the illustrated example, the third timing advance is received from the third network node 120C, in other examples the instructions are received from a different network node 120 such as the second network node 120B.

In some but not necessarily all examples, the user equipment 110 performs at least one of: transmitting a random access channel (RACH) signal corresponding to the PCI and/or TAG which is changed or activated; or receiving a physical downlink control channel (PDCCH) order triggering RACH transmission corresponding to the PCI and/or TAG which is changed or activated; or receiving a timing advance update and/or a timing advance indication corresponding to the to the PCI and/or TAG which is changed or activated. Each of these actions may cause the third timing advance to be available. In response, user equipment 110 may configure a fourth uplink transmission to be associated to the third timing advance.

Once the third timing advance is available, at 252 the user equipment 110 configures and performs transmission of a fourth uplink transmission (UL4) to be associated to the third timing advance. The fourth uplink transmission being associated with a third identifier and being to a third network node 120C. In some examples, the fourth uplink transmission is the same as the third uplink transmission of block 246 of FIG. 5.

In some examples there is a transition period from receiving instructions for switching the second identifier to a third identifier until the third identifier is applicable. During this transition period the user equipment 110 may perform a second uplink transmission with the second timing advance or an updated second timing advance. In other examples, the transition period is from receiving instructions for switching the second identifier to a third identifier until the third uplink transmission is performed. In some examples, the time until the third identifier is applicable is the first slot that is at least X ms or Y symbols after the last symbol of the acknowledgment of receiving instructions.

The concept and functionality of New Radio (NR) timing advance is the same or similar as the Long-Term Evolution LTE timing advance. Timing advance may be a special command (notification) from an enhanced base station (eNB) or a 5G / NR base station (gNB) to UE 110 that enables UE 110 to adjust its uplink (UL) transmission. A downlink (DL) frame may be offset from an UL by a value based on the TA. This kind of UL adjustment applies to, amongst others, Physical Uplink Shared Channel (PUSCH), Physical Uplink Control Channel (PUCCH) and Sounding Reference Signal (SRS).

Timing advance can be delivered to UE 110 through at least Random Access Response (RAR) or MAC CE as described in two cases below.

Through RAR: The UE 110 determines the timing advance value from two different MAC layer commands depending on the situation. For the first uplink message after Physical Random Access Channel (PRACH), the UE 110 applies the timing advance value that it extracts from RAR (RACH Response). After the initial RACH process, the UE 110 would apply the timing advance value that it extracts from timing advance MAC CE if it received it.

Through MAC CE: As mentioned above, the UE 110 adjust UL transmission timing based on RAR during the RACH procedure. Once the initial attach is complete, UE 110 adjusts UL transmission based on the MAC CE-Timing Advance. The Timing Advance Command Field may be 6 bits which means 64 steps in total ranging from - 32 to 32 Tc in real timing. If the Tc is 0.509, the range of the physical timing may be 16.3 µs to 16.3 µs with 15 kHz subcarrier spacing.

A timing advance group (TAG) consists of one or more serving cells with the same uplink TA and same downlink timing reference cell. Each TAG contains at least one serving cell with a configured uplink, and the mapping of each serving cell to a TAG is configured by Radio Resource Control (RRC).

TAG can be defined as, a group of serving cells that are configured by RRC and that, for the cells with a UL configured, using the same timing reference cell and the same timing advance value. A timing advance group containing the special cell (SpCell) of a MAC entity is referred to as Primary Timing Advance Group (PTAG), whereas the term Secondary Timing Advance Group (STAG) refers to other TAGs.

To support intercell multi TRP (mTRP) operation, a TCI state may be associated or corresponding to a PCI (physical cell identity), and at most two PCIs are associated to the activated TCI states. These aspects are covered by the following agreement: For inter-cell mTRP, one PCI associated with one or more of activated TCI states for PDSCH/PDCCH is associated with one CORESETPoollndex, and another PCI is associated with one or more of activated TCI states for PDSCH/PDCCH is associated with another CORESETPoollndex. FFS: The association between PCI and CORESETPoollndex when switching between intra-cell mTRP and inter-cell mTRP.

Multi-TRP uplink schemes are described as follows:
For (single-DCI) M-TRP Time Division Multiplexing (TDM) PUCCH repetition operation in FR2:
- Use of one PUCCH resource.
- Activation of two spatial relation info for a PUCCH resource via (extension of legacy) MAC CE.

For (single-DCI) mTRP TDM PUCCH repetition operation in FR1:
- Use of one PUCCH resource.
- Activation of two power control parameters sets (P0, closed-loop index, pathloss reference signal (PL RS)) for a PUCCH resource via (new) MAC CE.

Two mTRP (TDM) PUCCH repetition schemes are supported:
- Inter-slot repetition scheme (a.k.a. Scheme 1): PUCCH repetitions on a slot basis (similar to legacy).
- Intra-slot repetition scheme (a.k.a. Scheme 3): PUCCH repetitions on a sub-slot (2 or 7 symbols) basis.

Only single-DCI based M-TRP TDM PUSCH repetition operation is supported:
- M-TRP TDM PUSCH repetition scheme based on PUSCH repetition Type A and Type B.

M-TRP TDM PUSCH repetition operation enabled at least using:
- Two SRS resource sets configured, having the same number of SRS resources.
- For codebook-based mode: two SRI (SRS resource indicator) fields, two 'precoding information and number of layers' fields (NOTE: second field doesn't indicate number of layers).
- For non-codebook-based mode: two SRI fields (NOTE: second field doesn't indicate number of layers).
- Same number of layers per TRP assumed, for example same number of layers for all the PUSCH repetitions.

The unified TCI framework means that TCI states that so far provided quasi colocation (QCL) assumptions for the reception of downlink (DL) signals and channels would be used also to provide spatial sources for the transmission of UL signals and channels. Furthermore, the unified TCI framework defines the concept of indicated TCI state. The indicated TCI state can be joint DL and UL TCI state or separate DL and separate UL TCI states. Indicated TCI state provides QCL source (DL) and spatial source (UL) for the set of downlink signals and channels and for the set of uplink signals and channels, respectively. For example, there can be one indicated joint DL and UL or one indicated DL and one indicated UL TCI state for the UE 110.

The unified TCI framework comprises the following functionalities in high level:
- Common TCI state (a.k.a. indicated TCI) for a set of signals and channels at a time.
- TCI state can be joint DUUL, separate DL TCI state and separate UL TCI state.
- RRC configures set (or pool) of joint and/or separate TCI states.
- MAC activates a number (for example 8) of joint and/or separate TCI states.
   ∘ Before first indication, first activated TCI state is the current *indicated* TCI state.
- DCI indicates one of the activated TCI states to be *indicated* TCI state (which may be a common TCI state).

On the DCI-based TCI state indication:
- DCI format 1_1/1_2 with and without DL assignment is used to carry the TCI state indication.
- Indication confirmed by HARQ ACK by UE 110.
- Application time of the beam indication:
   ∘ the first slot that is at least X ms or Y symbols after the last symbol of the acknowledgment of the joint or separate DL/UL beam indication
- TCI field codepoint:
   - Joint:
      - TCI state for both DL and UL
   - Separate:
      - a pair of DL TCI state and UL TCI state
      - a DL TCI state (keep the current UL TCI state)
      - an UL TCI state (keep the current DL TCI state)

The operation of spatial relation info signaling, for PUCCH can be described as follows: a number of spatial relation info (for example *PUCCH-SpatialRelationInfo*) can be configured via RRC, where the selection of one spatial relation is done via MAC CE (known as PUCCH spatial relation Activation/Deactivation MAC CE). In Rel-15 the spatial relation update using MAC CE (for example beam switch) is signaled per PUCCH resource.

It is also possible to have a simultaneous update of a spatial relation per group of PUCCH resources by using one MAC CE (known as Enhanced PUCCH spatial relation Activation/Deactivation MAC CE); there could be up to four PUCCH resource groups configured per bandwidth part (BWP). Specifically, if the indicated PUCCH Resource ID is included in a PUCCH Resource Group (configured via resourceGroupToAddModList-r16) of the indicated UL BWP, no other PUCCH Resources within the same PUCCH Resource group are indicated in the MAC CE, and this MAC CE applies to all the PUCCH Resources in the PUCCH Resource group. In addition, the spatial relation of multiple PUCCH resources can be updated/indicated in the same MAC CE.

In some examples of the disclosure, the following method is provided:
For a UE 110 that maintains at least two different timing advance (TA) for at least two different UL transmissions within a BWP/CC, when the UE 110 is activated/indicated at least one TCI state (such as UL/DL or joint TCI state) or at least one spatial relation corresponding to or associated with an additional/new PCI and/or a TAG. The at least one spatial relation may also be represented by a spatial relation info or a power control parameter set info (for FR1) or an SRS resource indicator (or SRS resource(s)). The additional/new PCI may be a PCI that is different from a serving cell PCI and/or a PCI that is different from the PCI(s) corresponding to TCI states activated/used for earlier UL transmissions.

During a transition period, where the transition period may be defined as the period between the time that the UE 110 receives the above activation/indication (for example of at least one TCI state or at least one spatial relation corresponding to or associated with the additional/new PCI and/or TAG) and the time that the received activation/indication becomes applicable:
- For the UL transmissions (such as PUSCH, PUCCH, SRS) using previously activated/indicated TCI state(s) or spatial relation(s), the UE 110 may apply the uplink timing based on the latest TA update corresponding to the previously activated/indicated TCI state(s) or spatial relation(s).

After the transition period, for example starting from the time when the indicated TCI state or spatial relation becomes applicable:
- For the UL transmissions using the newly activated/indicated TCI state or spatial relation, the UE 110 may be specified or configured/indicated (for example via RRC) to perform one or more of the following:
   ∘ apply the uplink timing based on the latest TA update corresponding to the previously activated/indicated at least one TCI state or at least one spatial relation, or
   ∘ apply the uplink timing based on the latest TA update corresponding the newly activated/indicated at least one TCI state or at least one spatial relation, or
   ∘ cancel or not perform any UL transmission corresponding to (or using) the newly activated/indicated TCI state or spatial relation until UE 110 transmits RACH corresponding to the additional PCI and/or TAG, or until the UE 110 receives PDCCH order triggering RACH transmission corresponding to the additional PCI and/or TAG, or until the UE 110 receives TA update/indication corresponding to the additional PCI and/or TAG.

In one variant, the above-mentioned behaviors can be separately defined for each CORESETPoollndex, for example the previously & newly activated/indicated TCI state(s) or spatial relation(s) may be corresponding or related to the same CORESETPoolIndex.

In another variant, the above-mentioned behaviors can be separately defined for each TAG, for example the previously & newly activated/indicated TCI state(s) or spatial relation(s) may be corresponding or related to the same TAG.

In one another variant, the above-mentioned behaviors can be defined within the same PCI, for example the previously & newly activated/indicated TCI state(s) or spatial relation(s) may be corresponding or related to the same PCI.

The (latest) TA update above may be based on UE 110 autonomous adjustment and/or based on TA indication/update from the network 100.

The above correspondence or association of a TCI state to a PCI and/or TAG may be based on at least one of the following:
- Downlink Reference Signal (DL RS) (such as Synchronization Signal Block (SSB), Channel Status Information Reference Signal (CSI-RS)) grouping where each DL RS group may be associated to a PCI and/or TAG (or CORESETPoollndex).
- PL-RS (pathloss reference RS) associated with the TCI state, where this PL-RS may be a DL RS which may be associated to a PCI and/or TAG.

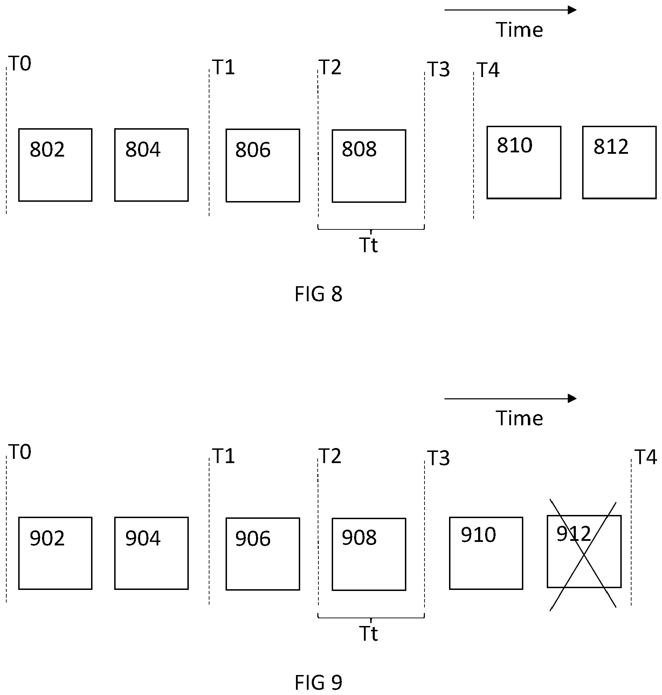

FIG. 8 illustrates some aspects of examples of the disclosure. In FIG. 8, a series of signals 802 - 812 are sent by a user equipment 110. At T0 an indication of a TCI state corresponding to TAG1 and PCI0 is received. This may be termed TCI state x. A first UL transmission 802 is performed which corresponds to information set #1, and to PCI0 and TAG0. A second UL transmission 804 is performed which corresponds to information set #2, and to PCI0 and TAG1.

At T1 the activation of at least one TCI state corresponding to PC1 and/or TAG1 is received. A third UL transmission 806 is performed which corresponds to information set #1, and to PCI0 and TAG0.

At T2 the indication of TCI state corresponding to PC1 and/or TAG1 is received. This may be termed TCI state y. For the transition period, Tt, TCI state y is not applicable yet. A fourth UL transmission 808 is performed which corresponds to information set #2, and to PCI0 and TAG1. For such transmissions the UE 110 applies the TA based on the latest TA update corresponding to TAG1 associated with the previously indicated TCI state (TCI state x).

At T3, TCI state y becomes applicable. At T4 the TA for TAG1/PCI1 is received. A fifth UL transmission 810 is performed which corresponds to information set #1, and to PCI0 and TAG0. A sixth UL transmission 812 is performed which corresponds to information set #2, and to PCI1 and TAG1. For the sixth UL transmission 812 the UE 110 applies the TA update based on the latest TA corresponding to TAG1 and/or PCI1 associated with the newly indicated TCI state (TCI state y).

FIG. 9 illustrates some aspects of examples of the disclosure. In FIG. 9, a series of signals 902 - 910 are sent by a user equipment 110. FIG. 9 is similar to FIG. 8 but differs in that T4 occurs later and so the sixth UL transmission 912 is dropped/cancelled.

When it is time to configure/transmit the sixth UL transmission 912, T4 has not yet occurred and so the TA for TAG1/PCI1 has not been received. The UE 110 cancels the sixth UL transmission 912 (and potentially future similar transmissions) as it corresponds to newly active PCI1 and the UE 110 hasn't yet received the related TA indication/update.

Some advantages of the present disclosure are that it defines the UE 110 behaviours in terms of TA application to UL transmissions when an (additional) PCI is activated through TCI state(s) activation, during and after a transition period such as the one corresponding to TCI state or spatial relation or beam application. The proposed behaviour covers various aspects ranging from defining the TA applicability aspects for some UL transmissions to cancelling/not transmitting some UL transmissions, depending on whether these UL transmissions are within the transition period or after this period, etc.

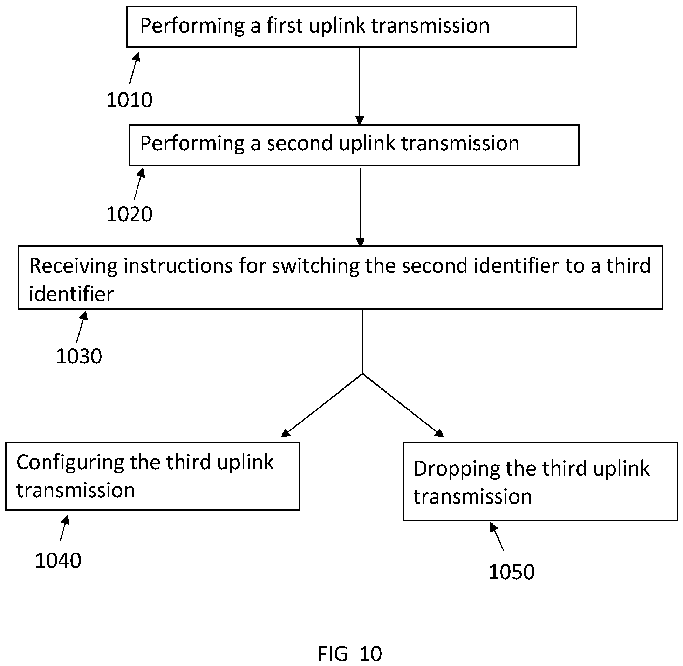

FIG. 10 illustrates an example method according to embodiments of the disclosure. The method is performed by a user equipment 110. At block 1010, the method comprises performing a first uplink transmission with a first timing advance. At block 1020, the method comprises performing a second uplink transmission with a second timing advance. The first uplink transmission is associated with a first identifier and the second uplink transmission is associated with a second identifier. At block 1030, the method comprises receiving instructions for switching the second identifier to a third identifier, wherein the third identifier is associated with a third uplink transmission. The method also comprises performing at least one of: configuring the third uplink transmission to be associated with the second timing advance or an updated second timing advance or a third timing advance, at block 1040; or dropping the third uplink transmission, at block 1050.

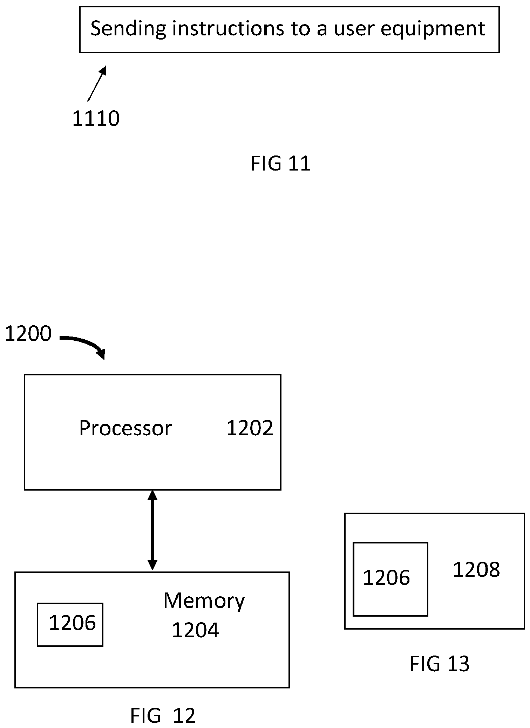

FIG. 11 illustrates an example method according to embodiments of the disclosure. The method is performed by a network node 120. The method comprises sending instructions to a user equipment 110 to switch a second identifier to a third identifier. The user equipment 110 is configured for a first uplink transmission with a first timing advance and configured for a second uplink transmission with a second timing advance. The first uplink transmission is associated with a first identifier, the second uplink transmission is associated with a second identifier, and the third identifier is associated with a third uplink transmission. The instructions specify the third uplink transmission to have the second timing advance or an updated second timing advance or a third timing advance, or to drop the third uplink transmission.

FIG. 12 illustrates an example of a controller 1200 suitable for use in an apparatus 110, 120. Implementation of a controller 1200 may be as controller circuitry. The controller 1200 may be implemented in hardware alone, have certain aspects in software including firmware alone or can be a combination of hardware and software (including firmware).

As illustrated in FIG. 12 the controller 1200 may be implemented using instructions that enable hardware functionality, for example, by using executable instructions of a computer program 1206 in a general-purpose or special-purpose processor 1202 that may be stored on a computer readable storage medium (disk, memory etc.) to be executed by such a processor 1202.

The processor 1202 is configured to read from and write to the memory 1204. The processor 1202 may also comprise an output interface via which data and/or commands are output by the processor 1202 and an input interface via which data and/or commands are input to the processor 1202.

The memory 1204 stores a computer program 1206 comprising computer program instructions (computer program code) that controls the operation of the apparatus 110, 120 when loaded into the processor 1202. The computer program instructions, of the computer program 1206, provide the logic and routines that enables the apparatus 110, 120 to perform the methods illustrated in the accompanying Figs. The processor 1202 by reading the memory 1204 is able to load and execute the computer program 1206.

The apparatus 110 comprises:
at least one processor 1202; and
at least one memory 1204 including computer program code,
the at least one memory 1204 and the computer program code configured to, with the at least one processor 1202, cause the apparatus 110 at least to perform:
   performing a first uplink transmission with a first timing advance and a second uplink transmission with a second timing advance, wherein the first uplink transmission is associated with a first identifier and the second uplink transmission is associated with a second identifier; receiving instructions for switching the second identifier to a third identifier, wherein the third identifier is associated with a third uplink transmission;
   performing at least one of: configuring the third uplink transmission to be associated with the second timing advance or an updated second timing advance or a third timing advance, or dropping the third uplink transmission.

The apparatus 110 comprises:
at least one processor 1202; and
at least one memory 1204 storing instructions that, when executed by the at least one processor 1202, cause the apparatus 110 at least to perform:
   performing a first uplink transmission with a first timing advance and a second uplink transmission with a second timing advance, wherein the first uplink transmission is associated with a first identifier and the second uplink transmission is associated with a second identifier; receiving instructions for switching the second identifier to a third identifier, wherein the third identifier is associated with a third uplink transmission;
   performing at least one of: configuring the third uplink transmission to be associated with the second timing advance or an updated second timing advance or a third timing advance, or dropping the third uplink transmission.

The apparatus 120 comprises:
at least one processor 1202; and
at least one memory 1204 including computer program code,
the at least one memory 1204 and the computer program code configured to, with the at least one processor 1202, cause the apparatus 120 at least to perform:
   sending instructions to a user equipment 110 configured for a first uplink transmission with a first timing advance wherein the first uplink transmission is associated with a first identifier, and configured for a second uplink transmission with a second timing advance wherein the second uplink transmission is associated with a second identifier, the instructions to switch the second identifier to a third identifier, wherein the third identifier is associated with a third uplink transmission;
   wherein the instructions specify the third uplink transmission to have the second timing advance or an updated second timing advance or a third timing advance, or to drop the third uplink transmission.

The apparatus 120 comprises:
at least one processor 1202; and
at least one memory 1204 storing instructions that, when executed by the at least one processor 1202, cause the apparatus 120 at least to perform:
   sending instructions to a user equipment 110 configured for a first uplink transmission with a first timing advance wherein the first uplink transmission is associated with a first identifier, and configured for a second uplink transmission with a second timing advance wherein the second uplink transmission is associated with a second identifier, the instructions to switch the second identifier to a third identifier, wherein the third identifier is associated with a third uplink transmission;
   wherein the instructions specify the third uplink transmission to have the second timing advance or an updated second timing advance or a third timing advance, or to drop the third uplink transmission.

As illustrated in FIG 13, the computer program 1206 may arrive at the apparatus 110, 120 via any suitable delivery mechanism 1208. The delivery mechanism 1208 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 1206. The delivery mechanism may be a signal configured to reliably transfer the computer program 1206. The apparatus 110, 120 may propagate or transmit the computer program 1206 as a computer data signal.

Computer program instructions for causing an apparatus to perform at least the following or for performing at least the following:
performing a first uplink transmission with a first timing advance and a second uplink transmission with a second timing advance, wherein the first uplink transmission is associated with a first identifier and the second uplink transmission is associated with a second identifier; receiving instructions for switching the second identifier to a third identifier, wherein the third identifier is associated with a third uplink transmission;
performing at least one of: configuring the third uplink transmission to be associated with the second timing advance or an updated second timing advance or a third timing advance, or dropping the third uplink transmission.

Computer program instructions for causing an apparatus to perform at least the following or for performing at least the following:
sending instructions to a user equipment 110 configured for a first uplink transmission with a first timing advance wherein the first uplink transmission is associated with a first identifier, and configured for a second uplink transmission with a second timing advance wherein the second uplink transmission is associated with a second identifier, the instructions to switch the second identifier to a third identifier, wherein the third identifier is associated with a third uplink transmission;
wherein the instructions specify the third uplink transmission to have the second timing advance or an updated second timing advance or a third timing advance, or to drop the third uplink transmission.

The computer program instructions may be comprised in a computer program, a non-transitory computer readable medium, a computer program product, a machine readable medium. In some but not necessarily all examples, the computer program instructions may be distributed over more than one computer program.

Although the memory 1204 is illustrated as a single component/circuitry it may be implemented as one or more separate components/circuitry some or all of which may be integrated/removable and/or may provide permanent/semi-permanent/ dynamic/cached storage.

Although the processor 1202 is illustrated as a single component/circuitry it may be implemented as one or more separate components/circuitry some or all of which may be integrated/removable. The processor 1202 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying FIGS 10 and 11 may represent steps in a method and/or sections of code in the computer program 1206. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

In some but not necessarily all examples, the apparatus 110, 120 is configured to communicate data from the apparatus 110, 120 with or without local storage of the data in a memory 1204 at the apparatus 110, 120 and with or without local processing of the data by circuitry or processors at the apparatus 110, 120.

The data may be stored in processed or unprocessed format remotely at one or more devices. The data may be stored in the Cloud.

The data may be processed remotely at one or more devices. The data may be partially processed locally and partially processed remotely at one or more devices.

The data may be communicated to the remote devices wirelessly via short range radio communications such as Wi-Fi or Bluetooth, for example, or over long-range cellular radio links. The apparatus may comprise a communications interface such as, for example, a radio transceiver for communication of data.

The apparatus 110, 120 may be part of the Internet of Things forming part of a larger, distributed network.

The processing of the data, whether local or remote, may be for the purpose of health monitoring, data aggregation, patient monitoring, vital signs monitoring or other purposes.

The processing of the data, whether local or remote, may involve artificial intelligence or machine learning algorithms. The data may, for example, be used as learning input to train a machine learning network or may be used as a query input to a machine learning network, which provides a response. The machine learning network may for example use linear regression, logistic regression, vector support machines or an acyclic machine learning network such as a single or multi hidden layer neural network.

The processing of the data, whether local or remote, may produce an output. The output may be communicated to the apparatus 110, 120 where it may produce an output sensible to the subject such as an audio output, visual output or haptic output.

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus 110 can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), for example so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or `the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or `the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
performing a first uplink transmission with a first timing advance and a second uplink transmission with a second timing advance, wherein the first uplink transmission is associated with a first identifier and the second uplink transmission is associated with a second identifier;
receiving instructions for switching the second identifier to a third identifier, wherein the third identifier is associated with a third uplink transmission; and
performing at least one of: configuring the third uplink transmission to be associated with the second timing advance or an updated second timing advance or a third timing advance, or dropping the third uplink transmission.

2. The apparatus of claim 1, wherein the first uplink transmission is to a first transmission reception point (TRP), wherein the second uplink transmission is to a second TRP, and wherein the third uplink transmission is to a third TRP different to the second TRP.

3. The apparatus of claim 1 or 2, wherein the instructions for switching the second identifier to a third identifier comprise instructions to change or activate a physical cell indicator (PCI) and/or to change or activate a timing advance group (TAG).

4. The apparatus of claim 1, 2 or 3, wherein the second timing advance and third timing advance are associated with different timing advance groups (TAGs).

5. The apparatus of any of the preceding claims, wherein the first, second and third identifier each are or correspond to at least one transmission state wherein each at least one transmission state is defined by a transmission configuration indicator (TCI) state.

6. The apparatus of any of the preceding claims, wherein the second identifier and third identifier correspond to at least one of: a same CORESETPoollndex, a same PCI, a same TAG, a same TRP, or a same TRP identifier (TRP ID).

7. The apparatus of any of the preceding claims, further comprising means for:
if the third timing advance is available configuring the third uplink transmission to be associated the third timing advance,
if the third timing advance is not available, configuring the third uplink transmission to be associated with the second timing advance or an updated second timing advance, or dropping the third uplink transmission.

8. The apparatus of any of the preceding claims, further comprising means for:
once the third timing advance is available, configuring a fourth uplink transmission to be associated to the third timing advance.

9. The apparatus of any of the preceding claims, further comprising means for:
receiving instructions from network that specify whether the third uplink transmission is to be associated with the second timing advance or an updated second timing advance or a third timing advance, or the third uplink transmission is to be dropped.

10. The apparatus of any of the preceding claims, wherein the third uplink transmission is performed contemporaneously with the first uplink transmission and/or the second uplink transmission.

11. The apparatus of any of the preceding claims, further comprising means for:
during a transition period from receiving instructions for switching the second identifier to a third identifier until the third uplink transmission is performed, performing a second uplink transmission with the second timing advance or an updated second timing advance.

12. A method comprising:
performing a first uplink transmission with a first timing advance and a second uplink transmission with a second timing advance, wherein the first uplink transmission is associated with a first identifier and the second uplink transmission is associated with a second identifier;
receiving instructions for switching the second identifier to a third identifier, wherein the third identifier is associated with a third uplink transmission; and
performing at least one of: configuring the third uplink transmission to be associated with the second timing advance or an updated second timing advance or a third timing advance, or dropping the third uplink transmission.

13. An apparatus comprising means for:
sending instructions to a user equipment configured for a first uplink transmission with a first timing advance wherein the first uplink transmission is associated with a first identifier, and configured for a second uplink transmission with a second timing advance wherein the second uplink transmission is associated with a second identifier, the instructions to switch the second identifier to a third identifier, wherein the third identifier is associated with a third uplink transmission;
wherein the instructions specify the third uplink transmission to have the second timing advance or an updated second timing advance or a third timing advance, or to drop the third uplink transmission.

14. The apparatus of claim 13, wherein the instructions to switch the second identifier to a third identifier comprise instructions to change or activate a physical cell indicator (PCI) and/or to change or activate a timing advance group (TAG),
wherein second timing advance and third timing advance are associated with different timing advance groups (TAGs).

15. A method comprising:
sending instructions to a user equipment configured for a first uplink transmission with a first timing advance wherein the first uplink transmission is associated with a first identifier, and configured for a second uplink transmission with a second timing advance wherein the second uplink transmission is associated with a second identifier, the instructions to switch the second identifier to a third identifier, wherein the third identifier is associated with a third uplink transmission;
wherein the instructions specify the third uplink transmission to have the second timing advance or an updated second timing advance or a third timing advance, or to drop the third uplink transmission.
